# FASCICULE DE BREVET EUROPEEN

(11) **EP 0 627 786 B1**
(45) Date de publication et mention de la délivrance du brevet: **17.04.1996**
(21) Numéro de dépôt: 94400944.8
(22) Date de dépôt: 02.05.1994
(51) Int. Cl.: H01R 13/635, H01R 43/26, H01R 13/703

(54) **Procédé et système pour la séparation physique de deux corps solidaires reliés électriquement entre eux**
Verfahren und System zur physischen Trennung zweier elektrisch verbundenen Körper
Process and system for the physical separation of two joint electrically connected bodies

(30) Priorité: 02.06.1993 FR 9306594
(43) Date de publication de la demande: 07.12.1994
(73) Titulaire: AEROSPATIALE Société Nationale Industrielle, F-75781 Paris Cédex 16 (FR)
(72) Inventeur: Meyrueix, Jean René, F-33160 Saint Médard en Jalles (FR); Aubret, Jean-Pierre, F-33200 Bordeaux (FR)
(74) Mandataire: Bonnetat, Christian

(56) Documents cités:
- EP-A- 0 415 043
- FR-A- 2 651 928
- US-A- 3 193 790

## Description

La présente invention concerne un procédé pour la séparation physique de deux corps verrouillés, avec rupture d'une liaison électrique, ainsi qu'un système de solidarisation amovible mettant en oeuvre ce procédé.

Quoique non exclusivement, la présente invention est plus particulièrement appropriée à la séparation de deux corps solidaires dans l'espace, en particulier la séparation d'une sonde spatiale fixée et reliée électriquement à une station orbitale.

On sait que, lors de certaines missions spatiales, la sonde doit rester fixée pendant une longue période, parfois même plusieurs années, à la station orbitale, ce qui nécessite par conséquent un système de verrouillage fiable pour maintenir ensemble, de façon efficace, les deux corps durant toute cette période.

Par ailleurs, comme la sonde est généralement alimentée en électricité par la station orbitale, une liaison électrique est prévue entre les deux corps.

La séparation des deux corps exige alors, non seulement la désolidarisation physique, mais également la rupture de cette liaison électrique.

Parfois, la liaison électrique est établie par l'intermédiaire d'un simple câble électrique protégé par une gaine.

La séparation des deux corps nécessite alors le sectionnement de ce câble électrique.

A cet effet, on connaît un dispositif de sectionnement à guillotine comportant une lame entraînée par du gaz sous pression et destinée à sectionner ledit câble. Cette solution présente un double inconvénient, l'un relatif au dispositif de sectionnement lui-même, et l'autre plus général apparaissant lors de toute rupture de liaison électrique, en particulier dans l'espace.

De plus, il n'existe pas, pour des câbles à sectionner de grand diamètre, de dispositif de sectionnement totalement fiable. En particulier, il n'existe pas de dispositif à double lame et ainsi si la lame unique est par exemple grippée, en raison d'une trop longue durée de non utilisation, la liaison n'est pas rompue.

Par ailleurs, par US-A-3 193 790, on connaît un connecteur, séparable et réarmable, pour un système de mise à feu de missiles. Un tel connecteur comporte une première partie, solidaire dudit système de mise à feu, et une seconde partie, solidaire d'un missile, lesdites parties étant enfichées l'une par rapport à l'autre et séparables sous l'action d'un marteau mû par la détente d'un ressort, en rompant les liaisons électriques entre le système de mise à feu et le missile.

D'une manière générale, le problème majeur apparaissant lors d'une séparation de deux corps avec rupture d'une liaison électrique concerne la présence, après la rupture, de faces externes électriquement actives, susceptibles de provoquer un court-circuit ou d'engendrer un arc électrique entre les deux corps.

Afin d'éviter des conséquences dommageables dues à la présence de ces faces électriquement actives dans le milieu environnant, par exemple dans le vide pour la séparation de deux corps se déplaçant dans l'espace, il est nécessaire de mettre en place des dispositifs supplémentaires destinés à rendre électriquement neutres les faces externes ayant contribué à la liaison électrique vis-à-vis des agressions mécaniques, thermiques et des parasites électromagnétiques.

On connaît des systèmes de connexion, comme par exemple celui connu commercialement sous le nom "G.H. Technology Connector Model 860", susceptibles de rendre électriquement neutre la face de contact de l'un des deux corps lors de la séparation avec rupture d'une liaison électrique de ceux-ci. Toutefois, la face de contact de l'autre corps n'est pas concernée et présente ainsi toujours les inconvénients mentionnés précédemment.

La présente invention a pour objet principal un procédé de séparation physique de deux corps avec rupture d'une liaison électrique, permettant d'éviter la présence de faces électriquement actives, sans toutefois faire appel à des dispositifs supplémentaires spécifiques.

A cet effet, le procédé de séparation physique avec rupture d'une liaison électrique entre deux corps verrouillés et reliés électriquement entre eux par au moins deux broches de connexion coopérantes agencées respectivement sur l'un et l'autre desdits corps, procédé selon lequel on déverrouille les deux corps et on écarte progressivement lesdits corps l'un de l'autre, est remarquable, selon l'invention, en ce que, lors de l'écartement progressif desdits corps, on effectue les étapes suivantes :
- on maintient momentanément le contact électrique entre les deux corps au niveau des deux broches de connexion ;
- à l'intérieur de chacun desdits corps, on rompt la liaison électrique qui mène à la broche ce connexion correspondante ;
- on met chacune desdites broches de connexion à la masse ; et
- on poursuit l'écartement des deux corps jusqu'à la séparation physique complète et la rupture du contact entre lesdites deux broches de connexion.

Ainsi, comme, simultanément à la séparation physique, on rend électriquement neutres les deux broches de connexion, il n'apparaît aucune charge électrique sur la face externe desdits corps au moment de la séparation complète et les phénomènes électriques dommageables mentionnés précédemment ne peuvent donc apparaître.

Par conséquent, on obtient, après la séparation des deux corps :
- une protection interne contre des courants d'interférence due à la fermeture d'une double cage de Faraday formée par chacune des enveloppes externes des deux corps ;
- une protection contre des perturbations thermiques, lesdits corps étant généralement soumis à des températures très basses dans l'espace ; et
- une protection contre des gaz ionisés présents dans l'espace.

La présente invention concerne également un système qui permet, après un verrouillage efficace et une liaison électrique entre deux corps pendant une durée ayant pu être extrêmement longue, la séparation desdits corps et la rupture de la liaison électrique, tout en remédiant aux inconvénients déjà mentionnés apparaissant lors d'une telle rupture.

A cette fin, le système de solidarisation amovible de deux corps permettant la séparation physique, avec rupture d'une liaison électrique, desdits corps reliés électriquement entre eux, comportant :
- deux parties de corps, dont l'une est fixée à l'un desdits corps et dont l'autre est fixée à l'autre corps ; et
- un dispositif de verrouillage qui maintient ensemble lesdites deux parties de corps et qui les libère dès qu'il est déclenché,
est remarquable, selon l'invention :
- en ce que la première partie de corps comporte :
   . un élément mobile, susceptible de se déplacer par rapport à ladite première partie de corps, en s'écartant de la seconde partie de corps ;
   . un dispositif élastique, assurant le déplacement dudit élément mobile ;
   . un premier équipage mobile, susceptible de se déplacer par rapport audit élément mobile, de manière à assurer le contact avec la seconde partie de corps par l'intermédiaire d'au moins une première broche de connexion, lorsque l'élément mobile s'écarte de celle-ci, et à rompre la liaison électrique menant à ladite première broche de connexion ; et
   . un premier moyen élastique, assurant le déplacement dudit premier équipage mobile ;
- en ce que la seconde partie de corps comporte :
   . un second équipage mobile, susceptible de se déplacer par rapport à ladite seconde partie de corps, de manière à rester en contact avec le premier équipage mobile par l'intermédiaire d'une seconde broche de connexion connectée à ladite première broche de connexion, lors de l'écartement dudit élément mobile, et à rompre la liaison électrique menant à ladite seconde broche de connexion ; et
   . un second moyen élastique, assurant le déplacement dudit second équipage mobile ; et
- en ce que chacune desdites première et seconde broches de connexion est susceptible d'être mise, lors du déplacement de l'équipage mobile correspondant, dans l'une de deux positions différentes :
   - une position de connexion, dans laquelle elle est reliée à une liaison électrique ; et
   - une position de déconnexion, dans laquelle elle est reliée à la masse.

Ainsi, simultanément au déplacement dudit élément mobile qui provoque la séparation physique des deux parties de corps et ainsi des deux corps qui y sont rattachés, le double déplacement des premier et second équipages mobiles permet de rompre chacune des liaisons électriques menant aux broches de connexion et ainsi de rompre la liaison électrique entre lesdits deux corps. La rupture de la liaison électrique est obtenue par le déplacement de la broche de connexion de sa position de connexion dans sa position de déconnexion, dans laquelle elle est de plus rendue électriquement neutre.

De façon avantageuse, ledit dispositif élastique et lesdits moyens élastiques sont constitués de ressorts réalisés, par exemple, en acier inoxydable, de manière à les protéger de l'environnement hostile dans lequel ils sont utilisés.

Par ailleurs, les contacts électriques existant dans le système conforme à l'invention peuvent être réalisés sous forme de contacts or-or qui sont particulièrement adaptés à des connexions de longues durées.

Comme on l'a vu précédemment, il peut arriver que les corps soient reliés entre eux pendant une longue période, nécessitant par conséquent un dispositif de verrouillage stable et efficace qui permet, par ailleurs, un déverrouillage rapide et fiable dès qu'il est déclenché. A cet effet, selon l'invention, le dispositif de verrouillage du système de solidarisation peut comporter :
- une mâchoire double associée à des sabots reliés ensemble par un fil et destinés à maintenir solidaires les deux parties de corps ; et
- un organe de sectionnement, susceptible de couper ledit fil.

Ainsi, le déverrouillage est obtenu par le simple sectionnement dudit fil de maintien des sabots. De façon avantageuse, ledit organe de sectionnement peut être double, c'est-à-dire qu'il peut comporter deux couteaux susceptibles de sectionner le fil, et il peut être déclenché par deux inflammateurs distincts, minimisant ainsi le risque de non-sectionnement dû, par exemple, au grippage de l'un des couteaux.

Les figures du dessin annexé feront bien comprendre comment l'invention peut être réalisée. Sur ces figures, des références identiques désignent des éléments semblables.

La figure 1 montre, en perspective, le système de solidarisation amovible conforme à l'invention reliant ensemble deux corps représentés partiellement.

La figure 2 est une coupe longitudinale partielle de l'une des deux parties de corps conforme à l'invention.

La figure 3 est une coupe longitudinale partielle de l'autre partie de corps conforme à l'invention.

La figure 4 illustre la liaison électrique d'une broche de connexion.

La figure 5 illustre la mise à la masse de la broche de connexion représentée sur la figure 4.

Les figures 6A, 6B et 6C illustrent les différentes étapes de la séparation des deux parties de corps.

La figure 7 est une vue de face d'un dispositif de verrouillage conforme à l'invention, dans l'état verrouillé.

La figure 8 est une vue de face semblable à celle de la figure 7, mais dans l'état déverrouillé.

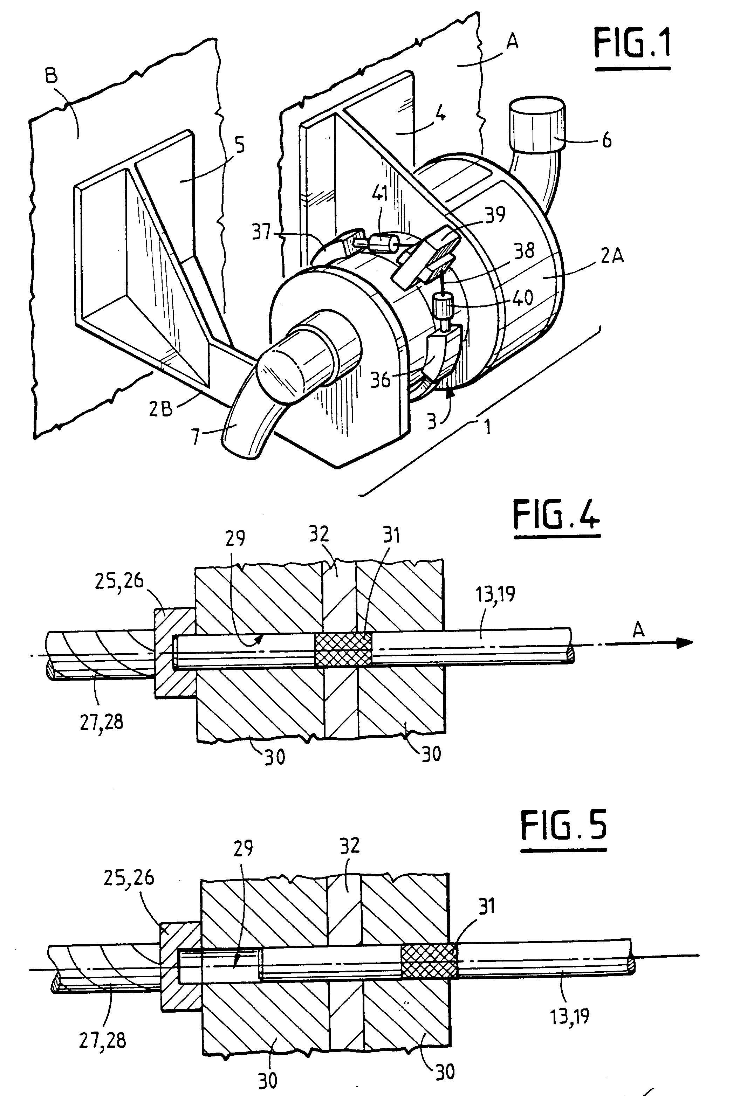

Le système de solidarisation 1, conforme à l'invention et représenté en perspective sur la figure 1, permet de relier entre eux deux corps A et B, par exemple une sonde spatiale et une station orbitale, représentés partiellement sur cette figure 1.

Ledit système de solidarisation 1 comporte deux parties de corps 2A et 2B maintenues ensemble par un dispositif de verrouillage 3, l'une 2A desdites parties de corps étant fixée à l'un A desdits corps au niveau d'une première plaque de fixation 4, et l'autre 2B desdites parties de corps étant fixée à l'autre corps B au niveau d'une seconde plaque de fixation 5.

Chacune desdites parties 2A et 2B comporte, par ailleurs, un tube 6,7 destiné à recevoir et à protéger un câble électrique (non visible sur la figure 1), lesdits câbles électriques étant reliés ensemble de manière à créer une liaison électrique entre les deux corps A et B.

Le système 1 conforme à l'invention permet d'effectuer, simultanément, la séparation physique desdits corps A et B et la rupture de cette liaison électrique.

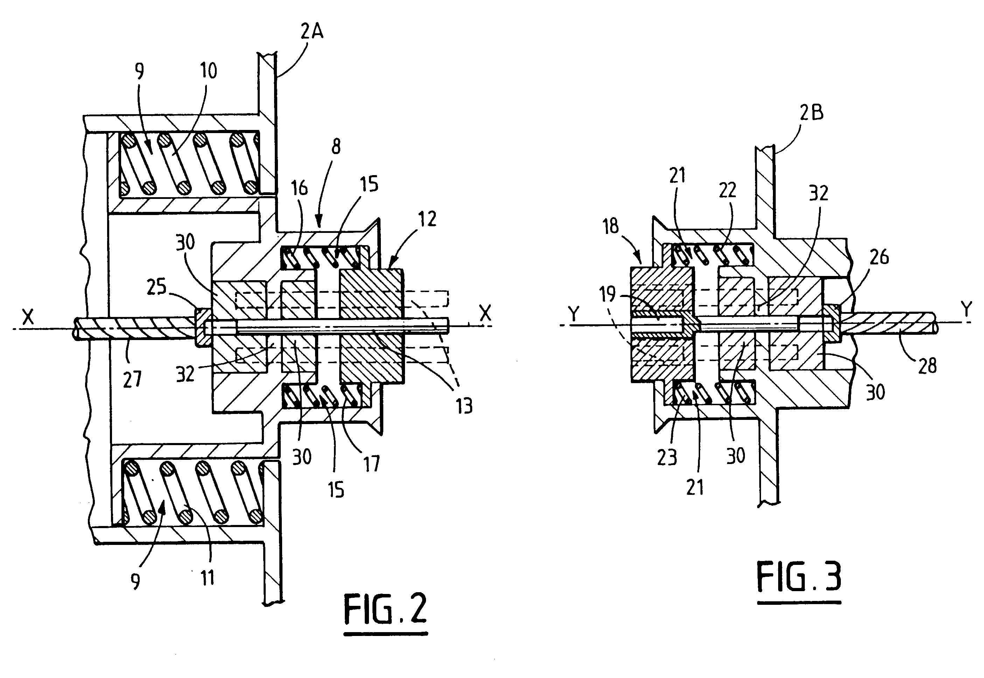

A cet effet, la partie de corps 2A représentée, partiellement et en coupe, sur la figure 2 comporte :
- un élément mobile 8 susceptible de se déplacer par rapport à ladite partie 2A, suivant une direction X-X, sous l'action d'un dispositif élastique 9 constitué de ressorts 10 et 11 ; et
- un équipage mobile 12, agencé à l'intérieur dudit élément mobile 8, comportant une pluralité de broches de connexion mâles 13, dont une seule est représentée en traits pleins, d'autres étant schématiquement illustrées par des traits interrompus à des fins de simplification du dessin.

Ledit équipage mobile 12 est susceptible de se déplacer, à l'intérieur de l'élément mobile 8, suivant la direction X-X, sous l'action d'un moyen élastique 15 constitué de ressorts 16 et 17.

La partie de corps 2B représentée, partiellement et en coupe, sur la figure 3 comporte, quant à elle, un équipage mobile 18 identique à l'équipage mobile 12 de la partie 2A. Ledit équipage mobile 18 comporte des broches de connexion femelles 19 respectivement complémentaires desdites broches de connexion mâles 13 de l'équipage mobile 12. A des fins de simplification du dessin, on n'a représenté qu'une seule broche de connexion femelle 19 en traits pleins, d'autres étant schématiquement illustrées par des traits interrompus. L'équipage mobile 18 est susceptible de se déplacer, par rapport à la partie 2B, suivant une direction Y-Y, sous l'action d'un moyen élastique 21 constitué de ressorts 22 et 23.

On remarquera que ledit dispositif élastique 9 et lesdits premier et second moyens élastiques 15 et 21 comportent chacun un grand nombre de ressorts, de sorte que la rupture d'un ou de quelques uns de ces ressorts ne remet pas en cause le fonctionnement du système.

Les broches de connexion 13 et 19 sont respectivement connectées à des douilles 25,26 reliées chacune à un fil électrique 27,28, établissant ainsi une liaison électrique, d'une part, entre la broche de connexion 13 et le fil 27 et, d'autre part, entre la broche de connexion 19 et le fil 28.

Comme les broches de connexion 13 et 19 sont complémentaires et coopérantes, en les connectant ensemble, on établit une liaison électrique entre le fil 27 et le fil 28, ce qui se produit lors du verrouillage des deux corps A et B, comme on le verra ci-après. Les paires de broches de connexion mâle et femelle coopérantes 13 et 19 sont au nombre des liaisons électriques devant être assurées entre lesdits deux corps A et B.

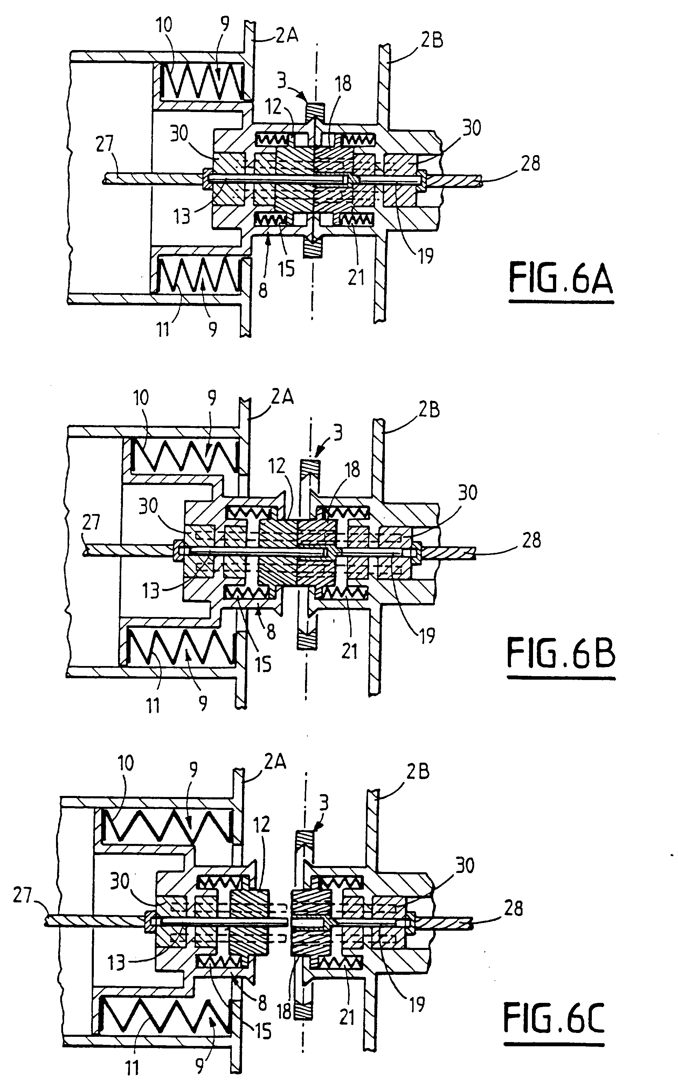

Sur la figure 4, on a représenté la connexion entre les broches de connexion 13,19 et les douilles 25,26 qui leur sont associées. Dans cette position de connexion, les ressorts 16, 17, 22 et 23 des équipages mobiles 12 et 18 sont comprimés. La détente des ressorts 16 et 17 de l'équipage mobile 12 provoque le déplacement de celui-ci et ainsi le déplacement de la broche de connexion 13 dans un canal 29 réalisé dans un matériau isolant 30 qui entoure ladite broche 13.

Le déplacement de la broche de connexion 13, dans le sens représenté par la flèche A, provoque la déconnexion entre cette broche 13 et la douille fixe 25, tel que représenté sur la figure 5. La broche 13, réalisée en un matériau conducteur, est, par ailleurs, entourée partiellement d'une petite gaine isolante 31.

Dans la position connectée de la figure 4, cette gaine isolante 31 est en contact d'une plaque conductrice 32 disposée dans le matériau isolant 30. Cette gaine isolante 31 empêche ainsi, dans cette position, la mise en contact électrique de la broche 13 et de cette plaque conductrice 32.

Dans la position déconnectée de la figure 5, la gaine isolante 31 est écartée de la plaque 32, entraînant ainsi une liaison électrique entre la broche 13 et la plaque 32. En reliant cette plaque 32 à la masse, il est ainsi possible de rendre électriquement neutre ladite broche de connexion 13.

Par conséquent, le déplacement de l'équipage mobile 12 et ainsi celui de la broche 13, dans le sens de la flèche A, sous l'action des ressorts 16 et 17, provoque non seulement la rupture de la liaison électrique menant à ladite broche 13, mais entraîne également la mise à la masse de cette dernière.

La déconnexion entre la broche de connexion 19 et la douille 26, ainsi que la mise à la masse de ladite broche de connexion 19, sont effectuées de façon identique.

Sur les figures 6A, 6B, 6C, on a représenté les différentes étapes conformes à l'invention, conduisant à la séparation des deux parties de corps 2A et 2B et, ainsi, à la désolidarisation des deux corps A et B, non représentés sur ces figures, initialement verrouillés et présentant une liaison électrique.

La figure 6A illustre l'état verrouillé initial, la figure 6B illustre la rupture de la liaison électrique durant la séparation des deux parties de corps 2A et 2B, et la figure 6C montre la séparation complète desdites parties de corps 2A et 2B.

Dans l'état verrouillé de la figure 6A, les deux parties 2A et 2B sont en contact, les broches mâle et femelle coopérantes 13 et 19 des équipages mobiles respectifs 12 et 18 sont connectées ensemble, et le système de verrouillage 3 est dans son état verrouillé. On présente, ci-après, un mode de réalisation préférentiel dudit système de verrouillage 3. Par ailleurs, les ressorts 16, 17, 22 et 23 des équipages mobiles 12 et 18 sont comprimés, de sorte que la connexion est établie entre les broches de connexion 13,19 et les douilles 25,26 qui leur sont associées et qu'ainsi les fils 27 et 28 sont reliés électriquement entre eux.

De plus, les ressorts 10 et 11 de l'élément mobile 8 de la partie de corps 2A sont également comprimés.

Lorsque le système de verrouillage 3 est déclenché, il libère les deux parties 2A et 2B l'une de l'autre et les différents ressorts sont susceptibles de se détendre.

La détente des ressorts 10 et 11 entraîne le déplacement de l'élément mobile 8 qui se déplace vers l'intérieur de la partie 2A s'écartant de la partie 2B, tel que représenté sur la figure 6B. Simultanément, la double détente des ressorts 16 et 17 de l'équipage mobile 12 et des ressorts 22 et 23 de l'équipage mobile 18 permet :
- d'une part de maintenir la connexion entre lesdites broches mâle et femelle coopérantes 13 et 19 ; et
- d'autre part de déconnecter ces broches 13 et 19 des douilles 25 et 26, qui leur sont respectivement associées, et de les amener à la masse, tel que décrit précédemment.

La situation représentée sur la figure 6B correspond à la fermeture d'une double cage de Faraday correspondant à l'enveloppe externe respective de chacun des deux corps avec les parties de corps qui y sont rattachées, les deux broches 13 et 19 connectées ensemble, initialement actives électriquement, étant toutes deux amenées à la masse. La séparation physique complète des deux parties 2A et 2B peut alors être effectuée sans risque d'apparition de phénomènes électriques dommageables, comme la création d'un arc électrique ou la génération d'un court-circuit.

Cette séparation physique complète est obtenue par un déplacement supplémentaire de l'élément mobile 8 vers l'intérieur de la partie 2A, tel que représenté sur la figure 6C.

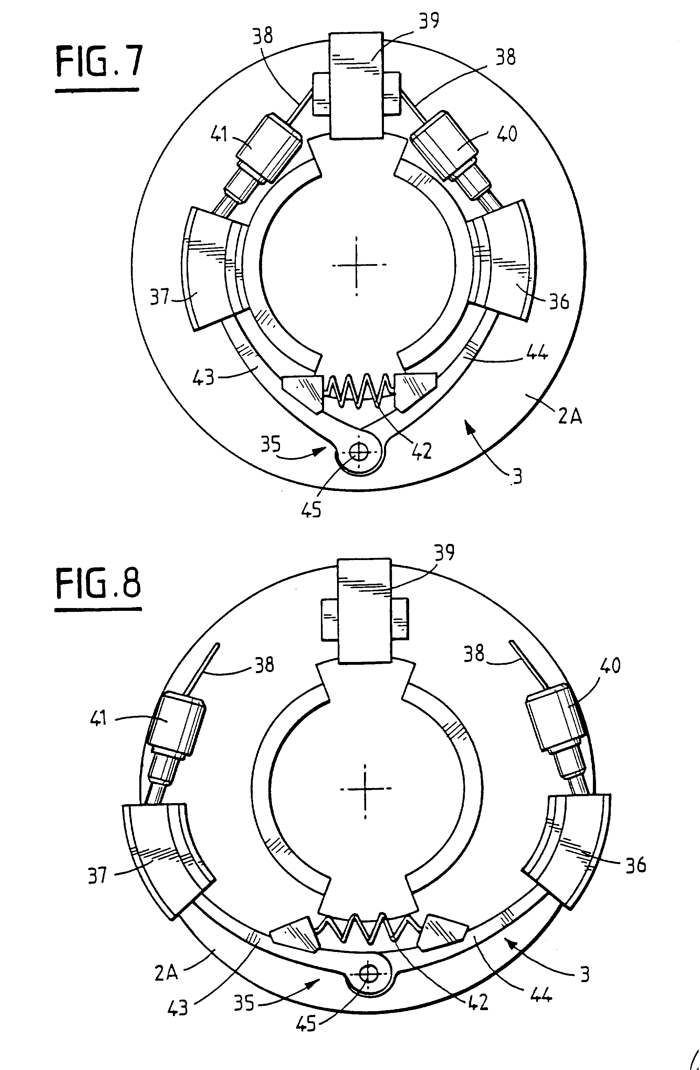

Selon un mode de réalisation préférentiel, le système de verrouillage 3 comporte, tel que représenté sur les figures 7 et 8 :
- une mâchoire double 35 associée à des sabots 36 et 37 destinés à maintenir solidaires les deux parties de corps 2A et 2B et reliés ensemble par un fil 38 ; et
- un organe de sectionnement 39, susceptible de couper ledit fil 38.

Le fil 38 destiné à maintenir les sabots 36 et 37 en position de verrouillage, tel que représenté sur la figure 7, est tendu par des tendeurs 40 et 41.

L'organe de sectionnement 39 et donc le système de verrouillage 3 sont déclenchés par un inflammateur (non représenté), par exemple du type NSI (Nasa Standard Initiator) ou du type ESI (ESA Standard Initiator), mis à feu par un signal électrique. Lorsqu'il est déclenché, ledit organe de sectionnement 39 coupe, par l'intermédiaire d'un couteau (non représenté), le fil 38 libérant ainsi les sabots 36 et 37 et la mâchoire 35 qui est alors écartée par un ressort 42, tel que représenté sur la figure 8. Ceci provoque l'écartement des sabots 36 et 37 des deux parties de corps et la libération de ces dernières.

On remarquera, toutefois, que le contact entre les deux parties de corps 2A et 2B est tel que, si le ressort 42 est rompu avant le déverrouillage, l'action des ressorts 10 et 11 est suffisante pour écarter lesdites parties 2A et 2B l'une de l'autre après le sectionnement du fil 38.

La mâchoire double 35 comporte deux parties indépendantes 43 et 44 tournant librement autour d'un axe 45, lui-même libre en rotation. Par conséquent, si l'axe 45 est grippé, le déverrouillage est quand même possible, les deux parties 43 et 44 tournant en effet librement autour dudit axe 45. De même, si l'une desdites parties 43 et 44 est grippée, le déverrouillage est toujours possible, l'axe tournant alors librement, ainsi que l'autre partie non grippée.

Afin d'éviter des problèmes lors du sectionnement du fil, l'organe de sectionnement peut comporter deux couteaux distincts (non représentés) déclenchés par deux inflammateurs séparés (non représentés), mais mis à feu par le même signal électrique de déclenchement. Ainsi, si l'un des couteaux est grippé, l'autre peut toujours effectuer le sectionnement. Toutes les caractéristiques décrites précédemment permettent d'éviter que le mauvais fonctionnement d'un élément du système ne remette en cause le fonctionnement global dudit système.

## Revendications

1. Procédé de séparation physique avec rupture d'une liaison électrique entre deux corps (A,B) verrouillés et reliés électriquement entre eux par au moins deux broches de connexion coopérantes agencées respectivement sur l'un et l'autre desdits corps, procédé selon lequel on déverrouille les deux corps et on écarte progressivement lesdits corps l'un de l'autre,
caractérisé en ce que, lors de l'écartement progressif desdits corps, on effectue les étapes suivantes :
- on maintient momentanément le contact électrique entre les deux corps au niveau des deux broches de connexion ;
- à l'intérieur de chacun desdits corps, on rompt la liaison électrique qui mène à la broche de connexion correspondante ;
- on met chacune desdites broches de connexion à la masse ; et
- on poursuit l'écartement des deux corps jusqu'à la séparation physique complète et la rupture de la connexion entre lesdites deux broches de connexion.

2. Système (1) de solidarisation amovible de deux corps (A,B) permettant la séparation physique, avec rupture d'une liaison électrique, desdits corps (A,B) reliés électriquement entre eux, comportant :
- deux parties de corps (2A,2B), dont l'une (2A) est fixée à l'un (A) desdits corps et dont l'autre (2B) est fixée à l'autre corps (B) ; et
- un dispositif de verrouillage (3) qui maintient ensemble lesdites deux parties de corps (2A,2B) et qui les libère dès qu'il est déclenché,
caractérisé :
- en ce que la première partie de corps (2A,) comporte :
. un élément mobile (8), susceptible de se déplacer par rapport à ladite première partie de corps (2A), en s'écartant de la seconde partie de corps (2B) ;
. un dispositif élastique (9), assurant le déplacement dudit élément mobile (8) ;
. un premier équipage mobile (12), susceptible de se déplacer par rapport audit élément mobile (8), de manière à assurer le contact avec la seconde partie de corps (2B) par l'intermédiaire d'au moins une première broche de connexion (13), lorsque l'élément mobile (8) s'écarte de celle-ci, et à rompre la liaison électrique menant à ladite première broche de connexion (13) ; et
. un premier moyen élastique (15) assurant le déplacement dudit premier équipage mobile (12) ;
- en ce que la seconde partie de corps (2B) comporte :
. un second équipage mobile (18), susceptible de se déplacer par rapport à ladite seconde partie de corps (2B), de manière à rester en contact avec le premier équipage mobile (12) par l'intermédiaire d'une seconde broche de connexion (19) connectée à ladite première broche de connexion (13), lors de l'écartement dudit élément mobile (8), et à rompre la liaison électrique menant à ladite seconde broche de connexion (19) ; et
. un second moyen élastique (21), assurant le déplacement dudit second équipage mobile (18) ; et
- en ce que chacune desdites première et seconde broches de connexion (13,19) est susceptible d'être mise, lors du déplacement de l'équipage mobile correspondant (12,18), dans l'une de deux positions différentes :
- une position de connexion, dans laquelle elle est reliée à une liaison électrique ; et
- une position de déconnexion, dans laquelle elle est reliée à la masse.

3. Système (1) selon la revendication 2,
caractérisé en ce que ledit dispositif élastique (9) est constitué de ressorts (10,11).

4. Système (1) selon l'une des revendications 2 ou 3,
caractérisé en ce que lesdits premier et second moyens élastiques (15,21) sont constitués de ressorts (16,17, 22,23).

5. Système (1) selon l'une des revendications 3 ou 4,
caractérisé en ce que lesdits ressorts (10,11,16,17,22,23) sont réalisés en acier inoxydable.

6. Système (1) selon l'une des revendications 2 à 5,
caractérisé en ce que les contacts électriques sont des contacts or-or.

7. Système (1) selon l'une des revendications 2 à 6,
caractérisé en ce que le dispositif de verrouillage (3) comporte :
- une mâchoire double (35), associée à des sabots (36,37) reliés ensemble par un fil (38) et destinés à maintenir solidaires les deux parties de corps ; et
- un organe de sectionnement (39), susceptible de couper ledit fil (38).

8. Système (1) selon la revendication 7,
caractérisé en ce que l'organe de sectionnement est double et en ce qu'il est déclenché par deux inflammateurs distincts.

## Patentansprüche

1. Verfahren zur physischen Trennung bei gleichzeitiger Unterbrechung einer elektrischen Verbindung zwischen zwei verriegelten Körpern (A,B), die elektrisch miteinander durch mindestens zwei miteinander zusammenwirkende Anschlußelemente verbunden sind und am einen bzw. anderen Körper angebracht sind, bei dem die beiden Körper entriegelt und allmählich voneinander abgestellt werden, dadurch gekennzeichnet, daß die allmähliche Abstellung der Körper in folgenden Stufen erfolgt:
- momentaner Erhalt des elektrischen Kontakts zwischen den beiden Körpern im Bereich der beiden Anschlußelemente;
- innerhalb jedes Körpers Unterbrechung der elektrischen Verbindung zum entsprechenden Anschlußelement;
- Verbindung jedes Anschlußelements mit Masse sowie
- weitere Abstellung der beiden Körper bis zur vollständigen physischen Trennung und der Unterbrechung der Verbindung zwischen den beiden Anschlußelementen.

2. System (1) zur lösbaren Verbindung von zwei Körpern (A,B), das eine physische Trennung bei gleichzeitiger Unterbrechung einer elektrischen Verbindung der elektrisch miteinander verbundenen Körper (A,B) ermöglicht, mit:
- zwei Körperteilen (2A,2B), von denen das eine (2A) an dem einen Körper (A) und das andere (2B) an dem anderen Körper (B) angebracht ist, und
- einer Verriegelungsvorrichtung (3), durch die die beiden Körperteile (2A,2B) zusammengehalten und bei Auslösung freigegeben werden,
dadurch gekennzeichnet:
- daß das erste Körperteil (2A) umfaßt:
. ein bewegliches Element (8), das sich gegenüber dem ersten Körperteil (2A) unter Abstellung vom zweiten Körperteil (2B) verschieben kann;
. eine elastische Vorrichtung (9), die die Verschiebung des beweglichen Elements (8) gewährleistet;
. ein erstes bewegliches Organ (12), das sich gegenüber dem beweglichen Element (8) verschieben kann, so daß der Kontakt mit dem zweiten Körperteil (2B) durch mindestens ein erstes Anschlußelement (13) gewährleistet wird, wenn das bewegliche Element (8) von diesem abgestellt wird, und die elektrische Verbindung zum ersten Anschlußelement (13) unterbrechen kann, und
. ein erstes elastisches Mittel (15), das die Verschiebung des ersten beweglichen Organs (12) gewährleistet;
- daß das zweite Körperteil (2B) umfaßt:
. ein zweites bewegliches Organ (18), das sich gegenüber dem zweiten Körperteil (2B) verschieben kann, so daß es mit dem ersten beweglichen Organ (12) über ein zweites Anschlußelement (19), das mit dem ersten Anschlußelement (13) verbunden ist, bei der Abstellung vom beweglichen Element (8) in Kontakt bleibt und die elektrische Verbindung zum zweiten Anschlußelement (19) unterbrechen kann, und
. ein zweites elastisches Mittel (21), das die Verschiebung des zweiten beweglichen Organs (18) gewährleistet, sowie
- dadurch, daß jedes erste und zweite Anschlußelement (13,19) bei der Verschiebung des entsprechenden beweglichen Organs (12,18) in eine von zwei unterschiedlichen Positionen versetzt werden kann:
- eine Anschlußposition, in der es mit einer elektrischen Verbindung verbunden ist, und
- eine Trennposition, in der es mit Masse verbunden ist.

3. System (1) nach Anspruch 2,
dadurch gekennzeichnet, daß die elastische Vorrichtung (9) aus Federn (10,11) besteht.

4. System (1) nach einem der Ansprüche 2 oder 3,
dadurch gekennzeichnet, daß das erste und zweite elastische Mittel (15,21) aus Federn (16,17,22,23) besteht.

5. System (1) nach einem der Ansprüche 3 oder 4,
dadurch gekennzeichnet, daß die Federn (10,11,16,17,22,23) aus rostfreiem Stahl verwirklicht werden.

6. System (1) nach einem der Ansprüche 2 bis 5,
dadurch gekennzeichnet, daß die elektrischen Kontakte Gold-Gold-Kontakte sind.

7. System (1) nach einem der Ansprüche 2 bis 6,
dadurch gekennzeichnet, daß die Verriegelungsvorrichtung (3) umfaßt:
- eine Doppelbacke (35) für die Hemmschuhe (36,37), die miteinander durch einen Draht (38) verbunden sind und die beiden Körperteile miteinander in Verbindung halten sollen, und
- ein Trennorgan (39), mit dem der Draht (38) getrennt werden kann.

8. System (1) nach Anspruch 7,
dadurch gekennzeichnet, daß das Trennorgan doppelt ausgeführt ist und dadurch, daß es durch zwei unterschiedliche Zünder ausgelöst wird.

## Claims

1. Process for physical separation, with breaking of an electrical link, of two bodies (A, B) locked and connected together electrically by at least two cooperating connection pins arranged respectively on one and the other of the said bodies, according to which process the two bodies are unlocked and the said bodies are moved progressively apart from each other, characterized in that, when moving the said bodies progressively apart, the following steps are carried out:
- the electrical contact between the two bodies is momentarily maintained at the two connection pins;
- the electrical link leading to the corresponding connection pin is broken inside each of the said bodies;
- each of the said connection pins is earthed; and
- movement of the two bodies apart is continued until complete physical separation and breaking of the connection between the said two connection pins.

2. System (1) for releasable joining of two bodies (A, B) allowing physical separation, with breaking of an electrical link, of the said bodies (A, B) which are electrically connected together, including,
- two body parts (2A, 2B), one (2A) of which is fixed to one (A) of the said bodies and the other (2B) of which is fixed to the other body (B); and
- a locking device (3) which keeps the said two body parts (2A, 2B) together and which releases them when it is triggered,
characterized:
- in that the first body part (2A) includes:
. a mobile element (8) capable of moving relative to the said first body part (2A), while moving away from the second body part (2B);
. an elastic device (9) which moves the said mobile element (8);
. a first mobile equipment item (12) capable of moving relative to the said mobile element (8) so as to make contact with the second body part (2B) via at least a first connection pin (13), when the mobile element (8) moves away from the latter, and to break the electrical link leading to the said first connection pin (13); and
. a first elastic means (15) which moves the said first mobile equipment item (12);
- in that the second body part (2B) includes:
. a second mobile equipment item (18) capable of moving relative to the said second body part (2B), so as to remain in contact with the first
. mobile equipment item (12) via a second connection pin (19) connected to the said first connection pin (13), when the said mobile element (8) moves away, and to break the electrical link leading to the said second connection pin (19); and
. a second elastic means (21) which moves the said second mobile equipment item (18); and
- in that each of the said first and second connection pins (13, 19) is capable of being set, during movement of the corresponding mobile equipment item (12, 18), in one of two different positions:
- a connection position, in which it is connected to an electrical link; and
- a disconnection position, in which it is earthed.

3. System (1) according to Claim 2, characterized in that the said elastic device (9) consists of springs (10, 11).

4. System (1) according to one of Claims 2 or 3, characterized in that the said first and second elastic means (15, 21) consist of springs (16, 17, 22, 23).

5. System (1) according to one of Claims 3 or 4, characterized in that the said springs (10, 11, 16, 17, 22, 23) are made of stainless steel.

6. System (1) according to one of Claims 2 to 5, characterized in that the electrical contacts are gold/gold contacts.

7. System (1) according to one of Claims 2 to 6, characterized in that the locking device (3) includes:
- a double jaw (35), associated with shoes (36, 37) which are connected together by a wire (38) and which are intended to keep the two body parts secured together; and
- a cutting member (39) capable of cutting the said wire (38).

8. System (1) according to Claim 7, characterized in that the cutting member is a double cutting member and in that it is triggered by two separate igniters.
